# EUROPEAN PATENT SPECIFICATION

(11) **EP 3 018 558 B1**
(45) Date of publication and mention of the grant of the patent: **14.08.2019**
(21) Application number: 14191697.3
(22) Date of filing: 04.11.2014
(51) Int. Cl.: G06F 3/01, G06F 3/0484

(54) **Method and system for detecting objects of interest**
Verfahren und System zur Detektion von Objekten von Interesse
Procédé et système pour détecter des objets d'intérêt

(43) Date of publication of application: 11.05.2016
(73) Proprietor: 4tiitoo GmbH, 80331 München (DE)
(72) Inventor: Meyer, Tore, 80337 Munich (DE); Odörfer, Stephan, 80802 Munich (DE)
(74) Representative: Qip Patentanwälte Dr. Kuehn & Partner mbB

(56) References cited:
- US-A1- 2011 175 932
- US-A1- 2013 278 625
- US-A1- 2014 111 431
- QIAOHUI ZHANG ET AL: "A gaze and speech multimodal interface", DISTRIBUTED COMPUTING SYSTEMS WORKSHOPS, 2004. PROCEEDINGS. 24TH INTER NATIONAL CONFERENCE ON HACHIOJI, TOKYO, JAPAN 23-24 MAR. 2004, PISCATAWAY, NJ, USA,IEEE, 23 March 2004 (2004-03-23), pages 208-214, XP010695607, DOI: 10.1109/ICDCSW.2004.1284033 ISBN: 978-0-7695-2087-2
- Anonymous: "Moving average - Wikipedia, the free encyclopedia", , 19 October 2014 (2014-10-19), XP055159323, Retrieved from the Internet: URL:http://en.wikipedia.org/w/index.php?ti tle=Moving_average&oldid=630207644 [retrieved on 2014-12-18]
- JOHN CANNY: "A Computational Approach to Edge Detection", IEEE TRANSACTIONS ON PATTERN ANALYSIS AND MACHINE INTELLIGENCE, IEEE COMPUTER SOCIETY, USA, vol. PAMI-8, no. 6, 1 November 1986 (1986-11-01), pages 679-698, XP001376469, ISSN: 0162-8828

## Description

### FIELD OF THE INVENTION

The invention relates to a method, a computer program and a computer-readable medium for detecting objects of interest with a gaze tracking system. Furthermore, the invention relates to a gaze tracking system.

### BACKGROUND OF THE INVENTION

Devices like PCs, laptops, smartphones or head mounted eye trackers (such as augmented reality glasses, virtual reality glasses, eye tracking glasses or smart glasses) may be equipped with a gaze tracking system, which is adapted for determining the direction in which a person using the device is looking (eye tracking) and for determining, at which point the person is looking (gaze tracking).

A gaze tracking system may be used for supporting a search, which is a key activity when working with computers. However, gaze tracking usually has a statistical deviation from the true area of focus of the person.

This deviation between true area of focus and the measured point of focus may be further increased because of further imprecisions: The characteristics of human sight may limit the gaze precision to about 1° as measured from the eye.

Simplified models and algorithms of the gaze tracking system may be imprecise. Gaze tracking systems usually comprise challenging measuring setups like glasses, contact lenses, certain types of eyes and lighting conditions, which may result in a poor calibration quality. Sometimes uncalibrated eye tracking systems are used. Furthermore, there may be undetected human eye activity between gaze samples.

These deviations very often make it difficult to deduct a reliable understanding of the objects (GUI elements like buttons, thumbnails, words, etc.) in focus, when interfaces are sized in a comfortable size for human perception and interaction.

Large objects (GUI elements, fonts, buttons, etc.) or large spacing between objects may partially overcome these problems, but may also result in several downsides. For example, they may slow down reading speed because the required eye movements for reading texts and large font sizes are out of proportion. The number of interactive objects may have to be reduced due to the limited display area.

US 2011/175932 A1 relates to a method for actuating eye tracker based contextual actions. Based on a gaze point, a GUI component is determined and under specific circumstances (such as the time the user has looked at the GUI component is longer as a specific time), the object is determined as object of interest.

Qiaohui Zhang et al., "A gaze and speech multimodal interface", Distributed Computing Systems Workshop 2004, proceedings 24th international conference on Hachioji, Tokyo, Japan, 23-24 Mar. 2004, Piscataway, NJ, USA, IEEE, 23 March 2004, pages 208-214 refers to integrating speech and gaze for generating a best list with objects of interest.

### DESCRIPTION OF THE INVENTION

It is an object of the invention to support a computer-based search with a gaze tracking system in an efficient way. It may be a further object of the invention to increase the precision of object detection in a gaze tracking system.

These objectives are achieved by the subject-matter of the independent claims. Further exemplary embodiments are evident from the dependent claims.

An aspect of the invention relates to a method for detecting objects of interest, which completely may be performed by a computer. Objects of interests may be words and/or images displayed on a screen provided by a computer or may be real world objects, which for example are watched by a person through smart glasses or a head mounted eye tracker.

According to an aspect of the disclosure, the method comprises: receiving gaze tracking data of a person looking at a collection of objects, the gaze tracking data comprising information, at which points the person is looking, and the collection of objects comprising objects with multiple occurrences; determining gaze interaction events from the gaze tracking data, wherein a gaze interaction event indicates that a specific gazing interaction has occurred at a gaze interaction area associated with the gaze interaction event; determining a map of objects in the field of view of the person, the map of objects indicating, at which positions an object in the collection of objects is arranged; associating an object with a gaze interaction event, if based on the map an occurrence of the object lies in the gaze interaction area of the gaze interaction event, thus generating a list of relevant objects, wherein each relevant object is associated with at least one gaze interaction event; associating a relevance value to each object in the list of relevant objects, wherein the relevance value is determined based on the interaction events associated with the respective relevant object; and selecting, from the list of relevant objects, objects with a relevance value higher than a threshold as objects of interest.

Firstly, gaze tracking data is received. For example, the gaze tracking data may comprise data points, which may comprise two coordinates, and which indicate a current focus point of one or two eyes of the person. The data points may be provided with timestamps and/or may be sampled with a constant or variable sampling rate.

After that, gaze interaction events may be identified from the gaze tracking data, for example, by counting the number of gaze data points within a specific area, and/or by identifying fixation points, where, for example, a cumulation of data points takes place. It also may be possible to derive motion vectors from the data points (a vector having a support point and a direction), which give rise to further gaze interaction events, as, for example, predicted target points and/or a crossing of two vectors.

A map of objects is used for mapping the gaze interaction events to specific objects. In general, gaze interaction events may be associated with points and/or areas that may be mapped to the objects with respect to the map. A gaze interaction area may be defined by a specific point (such as a data point or a fixation point) and a (minimal or maximal) distance to this point. A gaze interaction area may be a target area of a vector and/or a corridor formed of a vector.

The map of objects may comprise the outlines or shapes of the objects and/or the position(s) of the objects. For example, the map of objects may comprise an outlining rectangle or, in general, an outlining polygon or outlining shape for each object in the collection of objects. It has to be noted that objects may have a multiple occurrence, i.e. that the same object may be seen by the persons at more than one position. Thus, a multiple occurring object may have multiple positions in the map. For example, an object may be a specific word, the collection of objects thus may be a text and it may be possible that the same word occurs at different positions in the text. With the map, the specific word is then arranged at different positions.

It may be possible that gaze interaction events are determined before the map is determined. In this case, the map may be determined only in an area comprising gaze interaction events that, for example, is smaller than the field of view of the person or the display area. On the other hand it may be possible that the map is determined before the gaze interaction events, such that the detection of gaze interaction events may be associated with the objects.

With the present method, gaze interaction events may have a gaze interaction area that may overlap more than one object in the map. For example, a gaze hit at a specific point may be bordered with a gaze interaction area (such as a circle of a specific radius) accommodating for the imprecisions of gaze detection. An occurrence of an object may lie in the gaze interaction area of a gaze interaction event, when a distance of the object to a point (such as a data point or fixation point) of the gaze interaction event is smaller and/or bigger than a predefined distance. An occurrence of an object may lie in the gaze interaction area, when its outline in the map overlaps the gaze interaction area. Alternatively it may lie in the gaze interaction area, when it is completely within the gaze interaction area.

In this way, a list of relevant objects (i.e. objects that are associated with gaze interaction events) is created. These relevant objects also may be provided with a relevance value, which may be based on the gaze interaction objects. For example, the relevance value may depend on the type of gaze interaction event (a data point may result in a smaller relevance value than a fixation point) and/or a distance between a point of the gaze interaction event and the object.

In particular, the relevance value may be based on the overall number of gaze interaction events that may have been detected with respect to different occurrences of the object. Thus, an object that has been several times at least near a gaze interaction event may have a high relevance value.

In the end, objects with a relevance value higher than a threshold may be selected as objects of interest. In such a way, object of interest detection may be performed in the context of imprecise gaze detection. In particular, comparable small objects such as words may be detected.

Furthermore, from an interaction point of view it may be helpful to have a better understanding of the object being focused by the user. The method may provide further information about the focused objects and thus may enhance the processing of user interaction.

According to an embodiment of the invention, a gaze interaction event has a predefined relevance factor, which is used for determining the relevance value of an associated object. The relevance factors may be predefined with respect to the type of gaze interaction event. For example, a gaze hit may have a smaller relevance factor than a fixation point and/or a short fixation may have a smaller relevance than a long fixation. If an object is associated to more than one gaze interaction event, the relevance factors may be cumulated to determine the relevance value of the object.

According to an embodiment of the invention, the gaze interaction event comprises at least one of: a gaze hit, a fixation point, a movement vector, a saccade, a reading pattern, a change in pupil size, a repeated visit on a same object. A gaze hit may be based on a data point of the gaze tracking data. A fixation point may be based on a cumulation of data points. A movement vector may be based on a sequence of data points, that all have a distance smaller than a threshold to a best fit line, for example determined with a least mean square method. A reading pattern may be based on a sequence of parallel, consecutive movements.

According to an embodiment of the invention, a gaze interaction event comprises an interaction point and one or more probability areas are arranged around the interaction point. For example, the interaction point may be a data point or may be a fixation point. The probability areas may be defined by circles around the interaction point, i.e. a probability area may be defined by a minimal and/or a maximal distance to the interaction point. For example, a gaze interaction event may be mapped to an object, when the object lies within at least one of the probability areas. The gaze interaction area of the gaze interaction event may be based on its probability areas.

According to an embodiment of the invention, the relevance value of an object is dependent on the probability area, in which the object lies. For example, with increasing distance from the interaction point, probability areas may have decreasing probability values.

According to an embodiment of the invention, a dynamical threshold is used for selecting objects, the dynamical threshold being determined from the relevance values of the objects in the list of relevant objects. In general, the threshold may be predefined or may be dynamically determined. In the latter case, the probability values may be sorted and a cutoff may be determined where the curve of ascending or descending values has a steep flank (the derivative of the curve reaches a specific value). In general, the cutoff may be determined with any type of clustering of the probability values.

According to an embodiment of the invention, a geometric property of an object is used for associating the object to a gaze interaction event. The geometric property may be the shape/outline of the object. For example, with respect to a reading pattern, length of a line of words may be associated with a vector of (nearly) equal length of a movement vector of the reading pattern.

According to an embodiment of the invention, the collection of objects comprises objects, which are geometrically grouped together and which form geometrically separated groups. For example, the groups may be separate search results for a search conducted by the person. Each search result may comprise several words and/or images.

According to an embodiment of the invention, the relevance value of an object is dependent on the groups the object belongs to. For example, the relevance value may increase with the number of groups the object belongs to. For example, an object (such as a word) may have a higher relevance value, if it belongs to more than one search result than an object only belonging to one group.

According to an embodiment of the invention, the collection of objects comprises search results of a search conducted by the person and wherein the selected objects are provided for specifying the search more precisely. If multiple groups of objects are analyzed by the user, the method may identify the objects of interest based on the gaze data which make specific groups of objects interesting. Additionally, the additional groups of objects may be offered that fit the more specified search criteria of the search.

According to an embodiment of the invention, an indication of interest and/or indication of ignorance is associated to objects based on additional user actions. For example, the gaze tracking system may be aware of further searches of the person and/or other persons and may increase or decrease the relevance value of objects based on this knowledge. For example, the indication of interest and/or indication of ignorance may be a value that is used for changing the relevance value of an object. It also may be possible that the gaze tracking device provides an indication of interest based on additional user action such as a change in pupil size or a specific gaze pattern. Alternatively or additionally, an indication of interest may be provided from an additional sensor like a neuro sensor.

According to an embodiment of the invention, the selection from the list of relevant objects is additionally dependent on the indication of interest and/or indication of ignorance. It also may be possible that objects having a specific indication of interest or ignorance are discarded from the list of relevant objects or are added to this list.

According to an embodiment of the invention, the map of objects is generated from outlines of objects, which may be displayed on a display device. In the case, the objects may be displayed by the gaze tracking system, which also performs the method, outlines or shapes of the objects to be displayed may be provided and may be used for mapping the gaze tracking data to the objects. However, it also may be possible that the map of objects is generated from image data received from a camera recording the field of view of the person.

According to an embodiment of the invention, object data (such as image data or text data) of objects is compared to determine a multiple occurrence of an object. For example, the person may gaze at images showing plants (which may be seen as the objects). It may be possible that two images show a tree, but different trees. However, these two images may be seen as the same object. In the case of words, synonyms and/or misspelled words may be treated as the same object.

According to an embodiment of the invention, the collection of objects comprises at least one of: words, figures, characters, text blocks, icons, images, patterns and shapes. An object also may be a component of an image. For example, images may contain the faces of different persons and the objects in this case are the faces.

For example, if the user is searching something with a search engine, searches may be accelerated when using multiple keywords to refine the search. The relevant additional keywords are typically identified by the user based on the initial search, but most users do not trigger a refined search. Since the object detection device may have an understanding of the words that are relevant and/or ignored, it may actively propose the refined search lowering the barrier to a more efficient search. Understanding which words are focused based on a standard result page from a search engine on a system with gaze tracking is usually not possible based on the direct gaze hits.

This information allows the object detection device to then offer the user actions like offering to refine a search by including or excluding relevant words from the search or offering the right choice (inclusion or exclusion) directly if that information is available and statistically significant.

Further aspects of the invention relate to a computer program for detecting objects of interest, which, when being executed by a processor, is adapted to carry out the steps of the method as described in the above and in the following, and to a computer-readable medium, in which such a computer program is stored.

A computer-readable medium may be a floppy disk, a hard disk, an USB (Universal Serial Bus), Firewire or Thunderbolt storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

A further aspect of the invention relates to a gaze tracking system, which, for example, may be provided by a laptop or may be attached to glasses capable of eye tracking. It has to be understood that features of the method, the computer program and the computer-readable medium as described in the above and in the following may be features of the gaze tracking system as described in the above and in the following, and vice versa.

According to an embodiment of the invention, the gaze tracking system comprises a gaze tracking device for generating gaze tracking data and an object detection device, which may be adapted for performing the method as described in the above and in the following.

The gaze tracking device may comprise a light source for illuminating the eyes of a person and a camera or sensor for detecting the movement of the eyes. The gaze tracking device may generate gaze tracking data, for example a sequence of 2D data points, which indicate points a person is looking at.

The object detection device may be part of a computer, a smartphone, a tablet computer, or head mounted eye tracker such as smart glasses. In general, the object detection device may be adapted for processing the gaze tracking data.

The gaze tracking system furthermore may comprise a display device for displaying the collection of objects, for example words or images.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 shows a gaze tracking system according to an embodiment of the invention.
Fig. 2 shows a gaze tracking system according to a further embodiment of the invention.
Fig. 3 shows a flow diagram for a method for detection of objects of interest according to an embodiment of the invention.
Fig. 4 schematically shows a map of objects used in the method of Fig. 3.
Fig. 5 schematically shows a further map of objects used in the method of Fig. 3.
Fig. 6 shows a search result for illustrating the method of Fig. 3.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

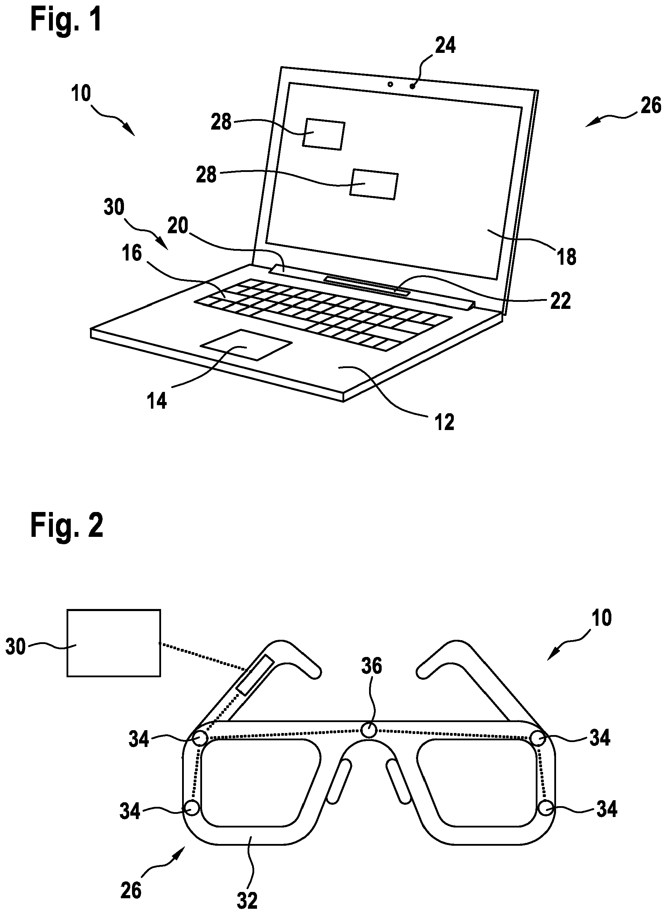

Fig. 1 shows a gaze tracking system 10 in the form of a laptop, which comprises a housing 12, a track pad 14 and a keyboard 16 attached to the housing 12, and a screen or display device 18, which is attached to the housing 12 via a hinge 20. On the hinge 20, a remote gaze tracker 22, for example comprising an infrared light source and corresponding sensors (a camera), is provided. Furthermore, a 3D camera 24 is provided above the screen 18.

With the remote gaze tracker 22, the laptop may be used as a gaze tracking device 26. Infrared light from the gaze tracker 22 is shone at the user and reflections from the eyeballs are recorded with an internal camera of the gaze tracker 22. From the recorded data of the infrared camera, the laptop 10 then predicts where the eyes are looking. In particular, the laptop 10 generates gaze tracking data, which may be provided to software components running in the laptop.

As will be explained in more detail below, the laptop 10 may display objects 28 and may use the gaze tracking data to detect, which objects 28 are interesting for the user. In this sense, the laptop 10 may be seen as an object detection device 30.

Fig. 2 shows a further type of gaze tracking system 10 comprising a head mounted eye tracker or glasses 32 as gaze tracking device 26 and an object detection device 30, which may be a PC or smartphone that is communicatively interconnected with the glasses 32. The glasses 32 comprise sensors or cameras 34 for recording the eyes of a wearer of the glasses 32 and the glasses 32 or the object detection device may generate gaze tracking data from the recorded data of the sensors 34.

The glasses 32 furthermore comprise a camera 36 for recording the field of view of the wearer. With data of the camera 36, the object detection device 30 may detect objects the person is looking at (for example by finding outlines or shapes in the camera data). Together with the gaze tracking data, the object detection device 30 may detect, which objects are interesting for the wearer.

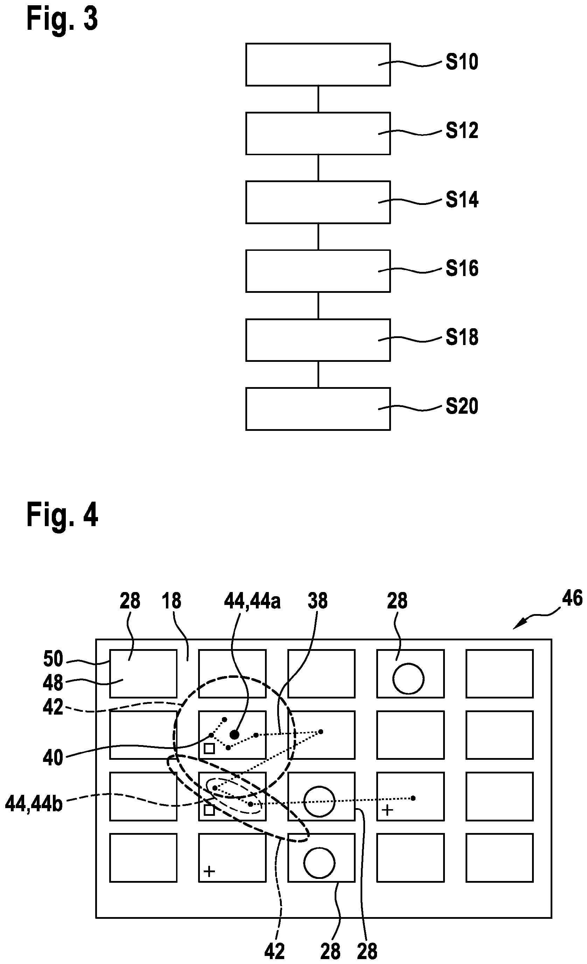

Fig. 3 shows a method for detecting objects of interest, which may be performed by the object detection device/module 30 of Fig. 1 or Fig. 2.

In step S10, the object detection device 30 receives gaze tracking data of a person looking at a collection of objects 28. As shown in Fig. 4, the gaze tracking data 38 may comprise a sequence of data points 40 that, for example, may be recorded by the gaze tracking device 26 of Fig. 1 or Fig. 2 with a constant or variable sampling rate. The data points 40 may comprise two coordinates that may be mapped to the coordinates of the display 18.

Fig. 4 furthermore shows such a collection of objects 28, which comprises objects 28 with multiple occurrences as indicated by the symbols. For example, the object "circle" occurs three times and the object "square" occurs two times. The objects 28 may be images on the display 18 or may be objects in the field of view of a person, when wearing the glasses 32.

In step S12, gaze interaction events 44 are determined from the gaze tracking data 38. A gaze interaction event 44 indicates that a specific gazing interaction has occurred at a gaze interaction area 42 associated with the gaze interaction event 44. The gaze tracking data 38 is processed by one or more algorithms, which determine the gaze interaction events 44 from the gaze tracking data.

An example for such a gaze interaction event 44 may be a fixation 44a, which may be generated when a specific number of data points 40 is located within a specific area. The gaze interaction area 42 of a fixation point 44a may be a circle around the interaction point 44a of the fixation.

A gaze interaction event 44 also may be based on one data point 40 resulting in a gaze hit event.

A further example may be a movement vector 44b, which may be determined from a sequence of data points 40 (for example two subsequent data points 40) indicating a user movement in a specific direction. The gaze interaction area 42 of a movement vector 44b may be the corridor of the vector.

A gaze interaction event 44 also may be based on an intersection point between two movement vectors 44b with different directions.

In step S14, a map 46 of objects 28 in the field of view of the person is determined, the map 46 of objects indicating, at which position an object 28 in the collection of objects 28 is arranged.

An example of such a map is also shown in Fig. 4. Each object 28 has a map area 48 in the map 46. In the case of Fig. 4, the map areas 46 are equally sized rectangles. For example, the objects 28 may be equally sized images and the map area 48 may be the outer border of these images.

It has to be noted that a single object 28 may have multiple map areas 46, when it occurs multiple times in the collection of objects 28. For example, in Fig. 4, the object "circle" has different rectangles.

When the objects 28 have a more complicated form (for example, when the objects are part of an image), also outlines 50 may be determined for the objects 28 and the map 46 of objects may be generated from these outlines 50.

In the case, that the objects 28 are real world objects (for example in the case of Fig. 2) and/or are not displayed by the gaze tracking system 10 itself, the map 46 of objects 28 may be generated from image data received from the camera 36. For example, an object recognition algorithm may be applied to the camera data and outlines of these objects are used for generating the map 46.

In step S16, an object 28 is associated with a gaze interaction event 44, if based on the map 46 an occurrence of the object 28 lies in the gaze interaction area 42 of the gaze interaction event 44. In this step, one or more gaze interaction events 42 are attributed to the objects 28 depending on their occurrence. For example, in Fig. 4, the object "square" is associated with the event 44a two times (since its map areas 42 overlap with the respective gaze intersection area 42) and with the event 44b one time. The object "circle" is associated with the event 44b, since one of its map areas 42 is in the corridor 42 of the movement vector 44b.

In such a way, a list of relevant objects is created, wherein each relevant object is associated with at least one gaze interaction event 44. These objects 28 may be relevant to the user.

As a further example, when the objects are words, the list may comprise all words that are associated with a gaze interaction event, such as a fixation point and/or a gaze point and/or are within a possible focus area and/or are between two data points.

It also may be possible that a relevance value is associated to each object 28 in the list of relevant objects, wherein the relevance value is determined based on the interaction events 44 associated with the respective relevant object.

In this step, several models may be used to assign a relevance value to the objects 28. For example, a type of gaze interaction event 44 may have a predefined relevance factor, which is used for determining the relevance value of an associated object 28. For example, an object 28 in the gaze interaction area 42 of a fixation point 44a may receive a higher relevance value than objects in the gaze interaction area of single gaze point 40.

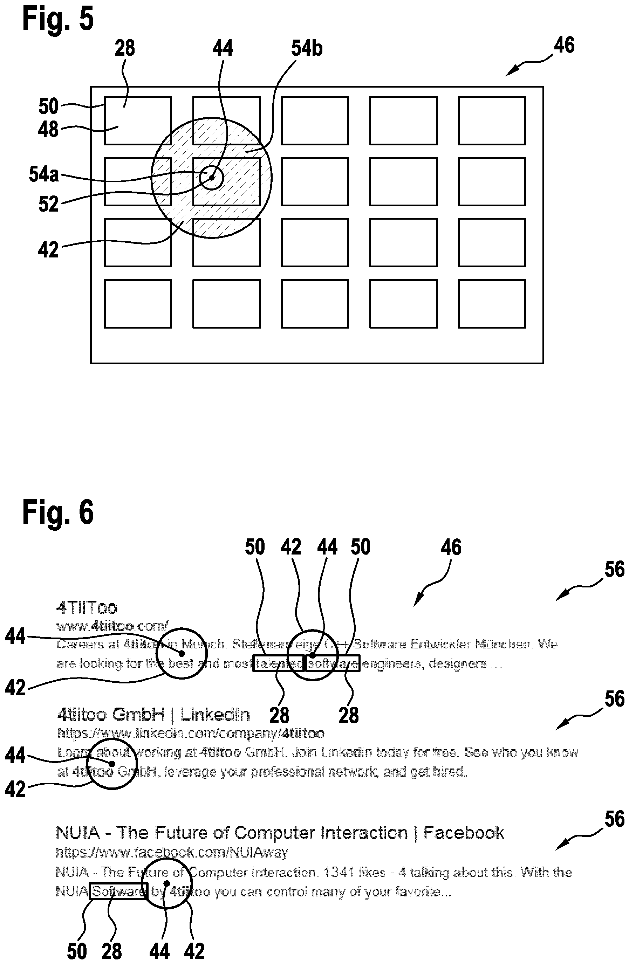

As shown in Fig 5, it also may be possible that a gaze interaction event 44 comprises an interaction point 52 and one or more probability areas 54a, 54b are arranged around the interaction point
52. As indicated in Fig. 5, the probability areas 54a, 54b may be defined by a circle and/or by a minimal and/or maximal distance from the interaction point 52. The relevance value of an object 28 may also depend on the probability area 54a, 54b, in which the object lies. For example, the object 28 completely surrounding the probability area 54a may have a higher relevance value as the objects 28 only intersecting the probability area 54a.

The gaze interaction area 42 may be composed of the probability areas 54a, 54b.

Additional information about the objects 28 may be used to link towards the gaze interaction events 44. It may be further possible that a geometric property of an object 28 is used for associating the object to a gaze interaction event 44. For example, the objects 28 may be text blocks and the geometrical property may be the length of a line of text. For example, with several lines of different length close to each other and a set of gaze interaction events 44 that hint at reading a short line may increase the relevance on the words in that line.

As shown in Fig. 6, the collection of objects 28 may comprise objects, which are geometrically grouped together and which form geometrically separated groups 56. For example, the groups 56 may be separate search results for a search conducted by a user. In Fig. 6, the groups 56 are groups of words.

Fig. 6 also shows a part of the map 46 with outlines 28 for several objects 28, i.e. the words "software" and "talented". Note that "Software" and "software" are the basis for one object 28, since the two strings are based on (slightly) different data may be identified as equal words.

The relevance value of an object 28 may be dependent on the groups 56 the object 28 belongs to. Models across the groups 56 of objects 28 may be used to further model the relevance value of the objects. For example, a word (such as "software") showing up as relevant in multiple groups 56 may get a higher relevance value as other words.

In step S18, objects 28 with a relevance value higher than a threshold are selected from the list of relevant objects, as objects of interest. A fixed or a dynamical threshold may be used for selecting these objects. The dynamical threshold may be determined from the relevance values of the objects 28 in the list of relevant objects. The threshold or cutoff value may be dynamically adjusted based on algorithms that detect clusters or steep drops in the curves of ordered relevance values of the objects 26.

It is also possible that an indication of interest and/or indication of ignorance is associated to objects 28 based on additional user actions, such as the selection of a search result or opening a new browser tab with a link in a search result. The selection from the list of relevant objects is then additionally dependent on the indication of interest and/or indication of ignorance.

Such indications also may be derived from analysing that a group 56 of objects was aborted after hitting an object. Such indications also may be based on user feedback, which may be direct (user discards an object from the list of objects) or indirect (user has already searched for the object in another search).

In step S20, the selected objects are provided for specifying the search more precisely. For example, in the case, when the collection of objects comprises search results of a search conducted by the person, the search may be refined with additionally found relevant objects. It also may be possible that the search results are matched to a new search including the selected objects as additional search criteria.

The relevant objects (for example words) may be shown on the display device 18 or communicated in another form also showing the object 28 and the user may select one or more of them to refine the search. It also may be possible that the user marks one or more of them as to be ignored.

The gaze tracking system 10 also may have a feedback loop into the models, which model the relevance value with respect to gaze interaction events 44 and/or groups 56 of objects. Real interest and/or ignorance may be used to adjust the algorithms and in particular the relevance factors for the user or a group of users.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: gaze tracking system
- 12: housing
- 14: track pad
- 16: keyboard
- 18: display device
- 20: hinge
- 22: gaze tracker
- 24: 3D camera
- 26: gaze tracking device
- 28: object
- 30: object detection device
- 32: head mounted eye tracking system
- 34: eye tracking sensor
- 36: camera
- 38: gaze tracking data
- 40: data point
- 42: gaze interaction area
- 44: gaze interaction event
- 46: map of objects
- 48: map area
- 50: outline
- 52: interaction point
- 54: probability area
- 56: group of objects

## Claims

1. A method for detecting objects (28) of interest, the method comprising:
receiving (S10) gaze tracking data (38) of a person looking at a collection of objects (28) from a gaze tracking device (26), the gaze tracking data (38) comprising data points, which indicate at which points the person is looking, and the collection of objects comprising objects with multiple occurrences;
determining (S12) gaze interaction events (44) from the gaze tracking data (38), wherein a gaze interaction event (44) indicates that a specific gaze interaction has occurred at a gaze interaction area (42) associated with the gaze interaction event (44), wherein a gaze interaction event (44) comprises an interaction point (52) and one or more probability areas (54a, 54b) are arranged around the interaction point (52), wherein an interaction point (52) is defined by a data point, and wherein a probability area (54) is defined by a minimal and maximal distance from the interaction point (52), wherein the gaze interaction area (42) is composed of the one or more probability areas (54a, 54b);
determining (S14) a map (46) of objects, wherein the objects are displayed on a display of the gaze tracking device or the map of objects is generated from image data received from a camera recording the field of view of the person, the map of objects indicating, at which position an object (28) in the collection of objects is arranged, and a multiple occurring object has multiple positions in the map, wherein each object has a map area (48) and a single object has multiple map areas, when it occurs multiple times in the collection of objects;
associating (S16) an object (28) with a gaze interaction event (44), if based on the map (46) an occurrence of the object (28) lies in the gaze interaction area (42) of the gaze interaction event (44), thus generating a list of relevant objects, wherein each relevant object is associated with at least one gaze interaction event (44);
associating a relevance value to each object (28) in the list of relevant objects, wherein the relevance value is determined based on the at least one gaze interaction event (44) associated with the respective relevant object, wherein the relevance value is based on an overall number of gaze interaction events (44) that have been detected with respect to different occurrences of the object (28);
selecting (S18), from the list of relevant objects, objects with a relevance value higher than a threshold as objects of interest, wherein a dynamic threshold is used for selecting objects (28), the dynamic threshold being determined from the relevance values of the objects in the list of relevant objects.

2. The method of claim 1,
wherein each gaze interaction event (44) has a predefined relevance factor, which is used for determining the relevance value of an associated object (28).

3. The method of claim 1 or 2,
wherein each gaze interaction event (44) comprises at least one of: a gaze hit, a fixation point, a movement vector, a saccade, a reading pattern, a change in pupil size, a repeated visit on a same object.

4. The method of one of the preceding claims,
wherein the relevance value of an object (28) is dependent on the probability area, in which the object lies.

5. The method of one of the preceding claims,
wherein a geometric property of an object (28) is used for associating the object to a gaze interaction event (44).

6. The method of one of the preceding claims,
wherein the collection of objects (28) comprises search results of a search conducted by the person and wherein the selected objects are provided for specifying the search more precisely.

7. The method of one of the preceding claims,
wherein an indication of interest and/or indication of ignorance is associated to objects (28) based on additional user actions, wherein the indication of interest and/or indication of ignorance is a value used for changing the relevance value of an object;
wherein the selection from the list of relevant objects is additionally dependent on the indication of interest and/or indication of ignorance.

8. The method of one of the preceding claims,
wherein the collection of objects (28) comprises at least one of: words, characters, figures, text blocks, icons, images, patterns, and shape.

9. A gaze tracking system (10), comprising:
a gaze tracking device (26) for generating gaze tracking data, the gaze tracking device comprising a camera and/or sensor for detecting a movement of eyes ; and
an object detection device (30) adapted for processing the gaze tracking data and for performing the method of one of claims 1 to 8.

10. A computer program for detecting objects of interest, which, when being executed by the system of claim 9, is adapted to carry out the steps of the method of one of claims 1 to 8.

11. A computer-readable medium, in which a computer program according to claim 10 is stored.

## Patentansprüche

1. Verfahren zum Detektieren von interessierenden Objekten (28), wobei das Verfahren Folgendes umfasst:
Empfangen (S10) von Blickverfolgungsdaten (38) einer Person, die eine Zusammenstellung von Objekten (28) betrachtet, von einer Blickverfolgungsvorrichtung (26), wobei die Blickverfolgungsdaten (38) Datenpunkte umfassen, die angeben, zu welchen Punkten die Person blickt, wobei die Zusammenstellung von Objekten Objekte mit mehrfachem Vorkommen umfasst;
Bestimmen (S12) von Blickinteraktionsereignissen (44) anhand der Blickverfolgungsdaten (38), wobei ein Blickinteraktionsereignis (44) angibt, dass eine spezielle Blickinteraktion in einem Blickinteraktionsbereich (42) stattgefunden hat, der mit dem Blickinteraktionsereignis (44) verknüpft ist, wobei ein Blickinteraktionsereignis (44) einen Interaktionspunkt (52) umfasst und ein oder mehrere Wahrscheinlichkeitsbereiche (54a, 54b) um den Interaktionspunkt (52) herum angeordnet sind, wobei ein Interaktionspunkt (52) durch einen Datenpunkt definiert wird, und wobei ein Wahrscheinlichkeitsbereich (54) durch eine kleinste und eine größte Distanz von dem Interaktionspunkt (52) definiert wird, wobei der Blickinteraktionsbereich (42) aus einem oder mehreren Wahrscheinlichkeitsbereichen (54a, 54b) zusammengesetzt ist;
Bestimmen (S14) einer Karte (46) von Objekten, wobei die Objekte auf einer Anzeige der Blickverfolgungsvorrichtung angezeigt werden oder die Karte von Objekten anhand von Bilddaten generiert wird, die von einer Kamera empfangen werden, die das Sichtfeld der Person aufzeichnet, wobei die Karte von Objekten anzeigt, an welcher Position ein Objekt (28) in der Zusammenstellung von Objekten angeordnet ist, und ein mehrfach vorhandenes Objekt mehrere Positionen in der Karte aufweist, wobei jedes Objekt einen Kartenbereich (48) aufweist und ein einzelnes Objekt mehrere Kartenbereiche aufweist, wenn es mehrere Male in der Zusammenstellung von Objekten auftaucht;
Verknüpfen (S16) eines Objekts (28) mit einem Blickinteraktionsereignis (44), falls, auf der Grundlage der Karte (46), ein Vorkommen des Objekts (28) in dem Blickinteraktionsbereich (42) des Blickinteraktionsereignisses (44) liegt, wodurch eine Liste relevanter Objekte generiert wird, wobei jedes relevante Objekt mit mindestens einem Blickinteraktionsereignis (44) verknüpft ist;
Verknüpfen eines Relevanzwertes mit jedem Objekt (28) in der Liste relevanter Objekte, wobei der Relevanzwert auf der Basis des mindestens einen Blickinteraktionsereignisses (44) bestimmt wird, das mit dem jeweiligen relevanten Objekt verknüpft ist, wobei der Relevanzwert auf einer Gesamtanzahl von Blickinteraktionsereignissen (44) basiert, die mit Bezug auf verschiedene Vorkommen des Objekts (28) detektiert wurden;
Auswählen (S18), aus der Liste relevanter Objekte, von Objekten mit einem Relevanzwert, der höher ist als eine Schwelle, als interessierende Objekte, wobei eine dynamische Schwelle zum Auswählen von Objekten (28) verwendet wird,
wobei die dynamische Schwelle anhand der Relevanzwerte der Objekte in der Liste relevanter Objekte bestimmt wird.

2. Verfahren nach Anspruch 1,
wobei jedes Blickinteraktionsereignis (44) einen zuvor festgelegten Relevanzfaktor aufweist, der zum Bestimmen des Relevanzwertes eines verknüpften Objekts (28) verwendet wird.

3. Verfahren nach Anspruch 1 oder 2,
wobei jedes Blickinteraktionsereignis (44) mindestens eines von Folgendem umfasst: einen Blicktreffer, einen Fixierungspunkt, einen Bewegungsvektor, ein plötzliches Anhalten des Blickes, ein Lesemuster, eine Änderung der Pupillengröße und ein wiederholtes Zurückkehren des Blickes zum selben Objekt.

4. Verfahren nach einem der vorangehenden Ansprüche,
wobei der Relevanzwert eines Objekts (28) von dem Wahrscheinlichkeitsbereich abhängig ist, in dem das Objekt liegt.

5. Verfahren nach einem der vorangehenden Ansprüche,
wobei eine geometrische Eigenschaft eines Objekts (28) zum Verknüpfen des Objekts mit einem Blickinteraktionsereignis (44) verwendet wird.

6. Verfahren nach einem der vorangehenden Ansprüche,
wobei die Zusammenstellung von Objekten (28) Suchergebnisse einer Suche umfasst, die durch die Person vorgenommen wurde, und wobei die ausgewählten Objekte zum genaueren Spezifizieren der Suche bereitgestellt werden.

7. Verfahren nach einem der vorangehenden Ansprüche,
wobei Objekten (28) auf der Basis zusätzlicher Nutzeraktionen ein Indikator auf Interesse und/oder ein Indikator auf Nichtbeachtung zugeordnet wird, wobei der Indikator auf Interesse und/oder der Indikator auf Nichtbeachtung ein Wert ist, der zum Ändern des Relevanzwertes eines Objekts verwendet wird;
wobei die Auswahl von der Liste relevanter Objekte zusätzlich von dem Indikator auf Interesse und/oder dem Indikator auf Nichtbeachtung abhängig ist.

8. Verfahren nach einem der vorangehenden Ansprüche,
wobei die Zusammenstellung von Objekten (28) mindestens eines von Folgendem umfasst: Wörter, Zeichen, Figuren, Textblöcke, Symbole, Bilder, Muster und Form.

9. Blickverfolgungssystem (10), umfassend:
eine Blickverfolgungsvorrichtung (26) zum Generieren von Blickverfolgungsdaten, wobei die Blickverfolgungsvorrichtung eine Kamera und/oder einen Sensor zum Detektieren einer Bewegung von Augen umfasst; und
eine Objektdetektionsvorrichtung (30), die zum Verarbeiten der Blickverfolgungsdaten und zum Ausführen des Verfahrens nach einem der Ansprüche 1 bis 8 ausgelegt ist.

10. Computerprogramm zum Detektieren von interessierenden Objekten, das, wenn es durch das System nach Anspruch 9 ausgeführt wird, dafür ausgelegt ist, die Schritte des Verfahrens nach einem der Ansprüche 1 bis 8 auszuführen.

11. Computerlesbares Medium, auf dem ein Computerprogramm nach Anspruch 10 gespeichert ist.

## Revendications

1. Procédé de détection d'objets (28) d'intérêt, le procédé comprenant de :
recevoir (S10) des données de suivi du regard (38) d'une personne regardant une collection d'objets (28) à partir d'un dispositif de suivi du regard (26), les données de suivi du regard (38) comprenant des points de données, qui indiquent les points que la personne regarde, et la collection d'objets comprenant des objets avec de multiples occurrences;
déterminer (S12) des événements d'interaction du regard ('M) à partir des données de suivi du regard (38), dans lequel un événement d'interaction du regard ('M) indique qu'une interaction du regard spécifique s'est produite dans une zone d'interaction du regard (42) associée à l'événement d'interaction du regard (41), dans lequel un événement d'interaction du regard (44) comprend un point d'interaction (52) et une ou plusieurs zones de probabilité (54a, 54b) sont disposées autour du point d'interaction (52), dans lequel un point d'interaction (52) est défini par un point de données, et dans lequel une zone de probabilité (54) est définie par une distance minimale et maximale par rapport au point d'interaction (52), dans lequel la zone d'interaction du regard (42) est composée de la ou des zones de probabilité (54a, 54b)
déterminer (S14) une carte (46) d'objets, dans lequel les objets sont affichés sur un écran du dispositif de suivi du regard ou la carte d'objets est générée à partir de données d'image reçues à partir d'une caméra enregistrant le champ de vision de la personne, la carte d'objets indiquant la position à laquelle un objet (28) dans la collection d'objets est agencé, et un objet à multiples occurrences a de multiples positions sur la carte, dans lequel chaque objet a une zone de carte (48) et un seul objet possède plusieurs zones de carte, lorsqu'il est présent plusieurs fois dans la collection d'objets;
associer (S16) un objet (28) à un événement d'interaction du regard (44), si, sur la base de la carte (46), une occurrence de l'objet (28) se situe dans la zone d'interaction du regard (42) de l'événement d'interaction du regard (44), générant ainsi une liste d'objets pertinents, dans lequel chaque objet pertinent est associé à au moins un événement d'interaction du regard (44);
associer une valeur de pertinence à chaque objet (28) dans la liste d'objets pertinents, dans lequel la valeur de pertinence est déterminée sur la base d'au moins un événement d'interaction du regard (44) associé à l'objet pertinent respectif, dans lequel la valeur de pertinence est basée sur un nombre total d'événements d'interaction du regard (44) qui ont été détectés par rapport à différentes occurrences de l'objet (28);
sélectionner (S18), dans la liste d'objets pertinents, des objets ayant une valeur de pertinence supérieure à un seuil en tant qu'objets d'intérêt, dans lequel un seuil dynamique est utilisé pour sélectionner des objets (28), le seuil dynamique étant déterminé à partir des valeurs de pertinence des objets dans la liste d'objets pertinents.

2. Procédé selon la revendication 1,
dans lequel chaque événement d'interaction du regard (44) a un facteur de pertinence prédéfini, qui est utilisé pour déterminer la valeur de pertinence d'un objet associé (28).

3. Procédé selon la revendication 1 ou 2,
dans lequel chaque événement d'interaction du regard (44) comprend au moins l'un parmi : un coup d'oeil, un point de fixation, un vecteur de mouvement, une saccade, un motif de lecture, un changement de la taille de la pupille, une visite répétée sur un même objet.

4. Procédé selon l'une des revendications précédentes,
dans lequel la valeur de pertinence d'un objet (28) dépend de la zone de probabilité dans laquelle se trouve l'objet.

5. Procédé selon l'une des revendications précédentes,
dans lequel une propriété géométrique d'un objet (28) est utilisée pour associer l'objet à un événement d'interaction du regard (44).

6. Procédé selon l'une des revendications précédentes,
dans lequel la collection d'objets (28) comprend des résultats de recherche d'une recherche effectuée par la personne et dans lequel les objets sélectionnés sont fournis pour spécifier la recherche plus précisément.

7. Procédé selon l'une des revendications précédentes, dans lequel une indication d'intérêt et/ou une indication d'ignorance est associée à des objets (28) sur la base d'actions supplémentaires de l'utilisateur, dans lequel l'indication d'intérêt et/ou l'indication d'ignorance est une valeur utilisée pour modifier la valeur de pertinence d'un objet;
dans lequel la sélection dans la liste d'objets pertinents dépend en outre de l'indication d'intérêt et/ou de l'indication d'ignorance.

8. Procédé selon l'une des revendications précédentes,
dans lequel la collection d'objets (28) comprend au moins l'un parmi : des mots, des caractères, des chiffres, des blocs de texte, des icônes, des images, des motifs et des formes.

9. Système de suivi du regard (10), comprenant :
un dispositif de suivi du regard (26) pour générer des données de suivi du regard, le dispositif de suivi du regard comprenant une caméra et/ou un capteur pour détecter un mouvement des yeux; et
un dispositif de détection d'objet (30) conçu pour traiter les données de suivi du regard et pour mettre en oeuvre le procédé selon l'une des revendications 1 à 8.

10. Programme d'ordinateur pour détecter des objets d'intérêt, qui, lorsqu'il est exécuté par le système de la revendication 9, est conçu pour exécuter les étapes du procédé de l'une des revendications 1 à 8.

11. Support lisible par ordinateur, sur lequel est stocké un programme d'ordinateur selon la revendication 10.
